# EUROPEAN PATENT SPECIFICATION

(11) **EP 3 789 588 B1**
(45) Date of publication and mention of the grant of the patent: **19.10.2022**
(21) Application number: 20184043.6
(22) Date of filing: 03.07.2020
(51) Int. Cl.: F01D 11/02, F16J 15/44

(54) **HYDROSTATIC SEAL ALIGNED WITH ROTOR ROTATION**
HYDROSTATISCHE DICHTUNG AUSGERICHTET MIT DER ROTORDREHRICHTUNG
JOINT HYDROSTATIQUE ALIGNÉ AVEC LA ROTATION DU ROTOR

(30) Priority: 03.09.2019 US 201916558875
(43) Date of publication of application: 10.03.2021
(73) Proprietor: Raytheon Technologies Corporation, Farmington, CT 06032 (US)
(72) Inventor: CHUONG, Conway, Manchester, CT 06040 (US); WILSON, Ross, South Glastonbury, CT 06073 (US)
(74) Representative: Dehns

(56) References cited:
- EP-A1- 3 284 983
- EP-A1- 3 418 610
- WO-A1-2015/147967
- US-A1- 2019 017 404

## Description

### BACKGROUND

The invention refers to seal assemblies for gas turbine engines.

In a gas turbine engine, a number of components rotate under tight tolerances about an engine central longitudinal axis relative to static components. For example, the compressor and turbine sections of the gas turbine engine include rotating rotors with rotor blades extending radially outward. The rotor rotates relative to a stator with a small annular gap therebetween. To increase efficiency of the gas turbine engine, it is important that such small gaps be maintained to limit leakage through the gap, but to also allow for rotation of the rotor relative to the stator.

Seals are often utilized to manage leakage through the gaps. Such seals are typically fixed to static components and may be contact seals, such as labyrinth or brush seals, while others may be non-contact seals such as hydrostatic seals. Some hydrostatic seals are configured with a shoe having a plurality of beams, the beams having radial travel in response to a pressure differential across the seal.

The seal shoe floats via its outboard beams. The intent is for the shoes to move radially up and down, perpendicular to the rotor surface, as to maintain a tight gap for sealing. In actual practice, the shoes do not move radially up and down but have a slight swing or imbalance in them. Due to the cantilever design of the shoe, each shoe has a "free end" that is radially softer and a "fixed end" which is radially stiffer. The free end has a larger radial swing than the fixed end. If the imbalance is too high, the seal shoe can clash with the rotor and cause rotor damage.

EP3284983A1 discloses a hydrostatic seal assembly comprising a seal support, a seal shoe and seal beams connecting the seal shoes with the seal support in a cantilevered manner. EP3418610A1, WO2015/147967A1 and US2019/017404A1 also disclose hydrostatic non-contact seals having beams and shoes disposed around a rotor.

### BRIEF DESCRIPTION

Viewed from one aspect there is provided a hydrostatic seal and rotor assembly according to claim 1.

In one embodiment, a hydrostatic seal and rotor assembly includes a rotor having a rotor rotational direction about a rotor central axis, and a hydrostatic seal assembly including a seal support, a seal shoe configured for sealing between the seal shoe and the rotor, and one or more seal beams operably connecting the seal shoe to the seal support. The one or more seal beams are configured as spring elements integral with the seal shoe to allow radial movement of the seal shoe relative to the seal support. The seal shoe is circumferentially cantilevered from a fixed end to a free end opposite the fixed end. The assembly is characterized in that the fixed end is located circumferentially upstream of the free end relative to the rotor rotational direction, to prevent damage to the rotor by the seal shoe when the rotor is rotated.

Optionally, the seal beam extends between a radially fixed first beam end and a radially movable second beam end.

Optionally, the fixed end of the seal shoe is located at the second beam end.

Optionally, one or more stops are formed in the seal shoe configured to limit radial travel of the seal shoe.

Optionally, a seal carrier is configured to axially and radially retain the seal support.

Optionally, the seal shoe is a plurality of circumferentially spaced and segmented seal shoes.

Each seal shoe of the plurality of seal shoes may be circumferentially cantilevered from a fixed end to a free end opposite the fixed end. The fixed end is located circumferentially upstream of the free end relative to the rotor rotational direction.

In another embodiment, a turbine section of a gas turbine engine includes a turbine stator, a turbine rotor configured to rotate in a rotor rotational direction about an engine central longitudinal axis relative to the turbine stator, and a hydrostatic seal assembly. The hydrostatic seal assembly includes a seal support, a seal shoe configured for sealing between the seal shoe and the rotor, and one or more seal beams operably connecting the seal shoe to the seal support. The one or more seal beams are configured as spring elements integral with the seal shoe to allow radial movement of the seal shoe relative to the seal support. The seal shoe is circumferentially cantilevered from a fixed end to a free end opposite the fixed end. The fixed end is located circumferentially upstream of the free end relative to the rotor rotational direction.

Optionally, the seal beam extends between a radially fixed first beam end and a radially movable second beam end.

Optionally, the fixed end of the seal shoe is located at the second beam end.

Optionally, one or more stops are formed in the seal shoe and are configured to limit radial travel of the seal shoe.

Optionally, a seal carrier is configured to axially and radially retain the seal support.

Optionally, the seal shoe is a plurality of circumferentially spaced and segmented seal shoes.

Each seal shoe of the plurality of seal shoes may be circumferentially cantilevered from a fixed end to a free end opposite the fixed end. The fixed end is located circumferentially upstream of the free end relative to the rotor rotational direction.

In yet another embodiment, a gas turbine engine includes a combustor, and a turbine section in fluid communication with the combustor. The turbine section includes a turbine stator, a turbine rotor configured to rotate about an engine central longitudinal axis relative to the turbine stator, and a hydrostatic seal assembly. The hydrostatic seal assembly includes a seal support, a seal shoe configured for sealing between the seal shoe and the rotor, and one or more seal beams operably connecting the seal shoe to the seal support. The one or more seal beams are configured as spring elements integral with the seal shoe to allow radial movement of the seal shoe relative to the seal support. The seal shoe is circumferentially cantilevered from a fixed end to a free end opposite the fixed end. The fixed end is located circumferentially upstream of the free end relative to the rotor rotational direction.

Optionally, the seal beam extends between a radially fixed first beam end and a radially movable second beam end.

Optionally, the fixed end of the seal shoe is located at the second beam end.

Optionally, one or more stops are formed in the seal shoe configured to limit radial travel of the seal shoe.

Optionally, a seal carrier is configured to axially and radially retain the seal support.

Optionally, the seal shoe is a plurality of circumferentially spaced and segmented seal shoes.

### BRIEF DESCRIPTION OF THE DRAWINGS

The following descriptions should not be considered limiting but are provided by way of example only. With reference to the accompanying drawings, like elements are numbered alike:
FIG. 1 is cross-sectional view of an embodiment of a gas turbine engine;
FIG. 2 is a cross-sectional view of an embodiment of a hydrostatic seal assembly for a gas turbine engine;
FIG. 3 is a cross-sectional view of an embodiment of a seal shoe of a hydrostatic seal assembly; and
FIG. 4 is another view of an embodiment of a hydrostatic seal assembly.

### DETAILED DESCRIPTION

A detailed description of one or more embodiments of the disclosed apparatus and method are presented herein by way of exemplification and not limitation with reference to the Figures.

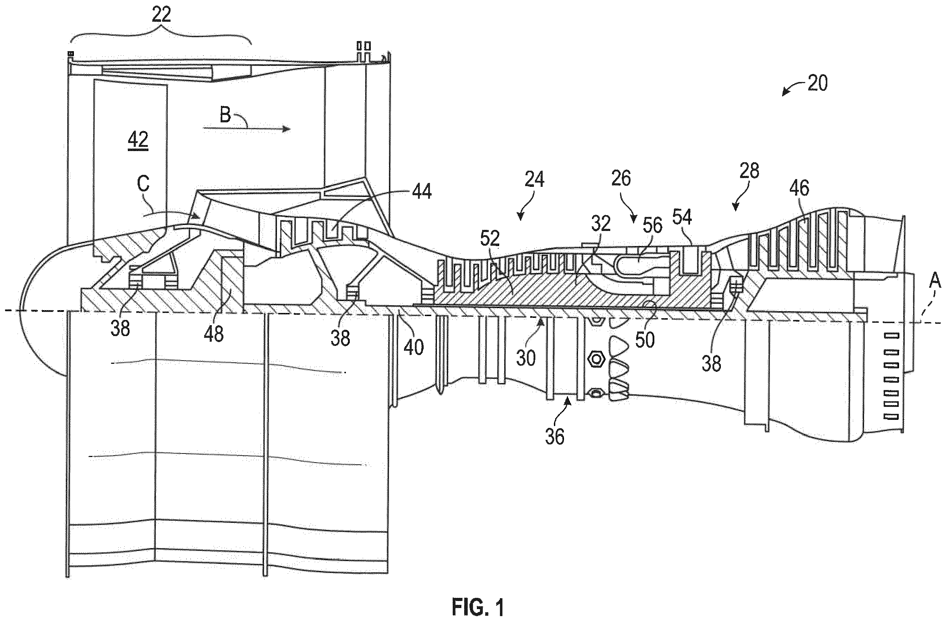

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including, for example, one spool or threespool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach (274 m/s) and about 35,000 feet (10,668 meters). The flight condition of 0.8 Mach (274 m/s) and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

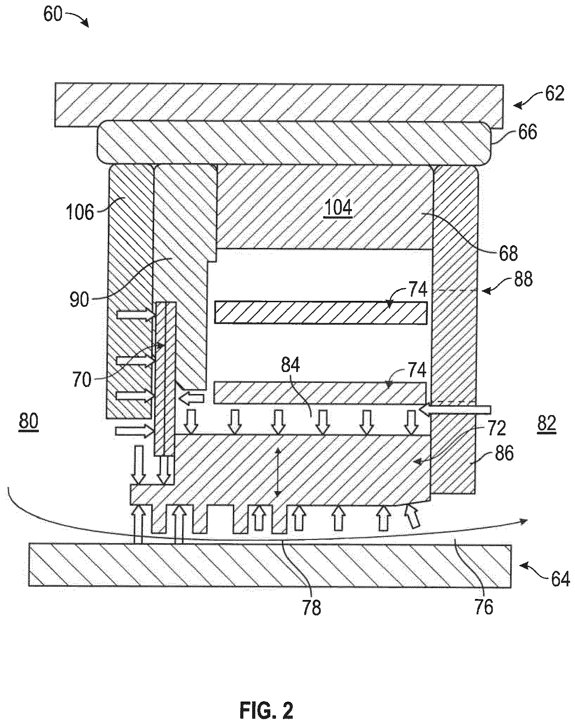

Referring now to FIG. 2, an embodiment of a seal 60 between a turbine stator 62 and a turbine rotor 64 is shown. The turbine rotor 64 is configured to rotate about the engine central longitudinal axis A relative to the turbine stator 62. While the description herein relates to sealing between a turbine stator and a turbine rotor, one skilled in the art will readily appreciate that the present disclosure may be readily applied at other locations of the gas turbine engine to provide sealing between a rotating component and a stationary component.

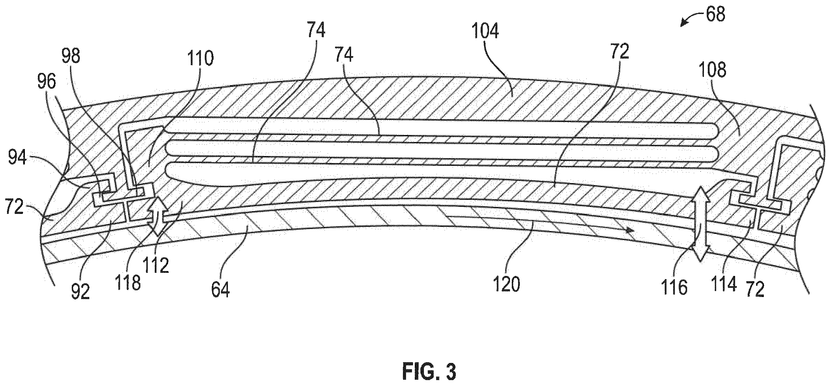

The seal 60 is fixed to the turbine stator 62 via a seal carrier 66 and includes a primary seal 68 and one or more secondary seals 70. The primary seal 68 includes a seal support 104, which supports a seal shoe 72 via one or more seal beams 74 which, as shown best in FIG. 3, are configured as spring elements integral with the seal support 104 and the seal shoe 72. Referring again to FIG. 2, the seal shoe 72 is radially moveable relative to the seal support 104, and radially the toward the turbine stator 62 and radially away from the turbine stator 62 to maintain a desired air gap 76 between the turbine rotor 64 and the seal shoe 72.

In operation, an airflow 78 flows through the air gap 76 from a high pressure area 80 upstream of the seal 60 toward a low pressure area 82 downstream of the seal 60. Further, airflow enters a seal cavity 84 radially outboard of the seal shoe 72 via one or more plate openings 86 in an aft plate 88 of the seal carrier 66, which is downstream of the seal shoe 72 and in some embodiments axially abuts the seal shoe 72. The secondary seals 70 are located upstream of the seal shoe 72 and in some embodiments abut the seal shoe 72. The secondary seal 70 prevents airflow from entering the seal cavity 84 from the high pressure area 80 and/or prevents airflow from exiting the seal cavity 84 via an upstream side of the seal 60. In some embodiments, the secondary seals 70 are axially retained at the seal shoe 72 by a secondary seal cover 106 upstream of the secondary seals 70. Further, a radial and axial position of the secondary seal 70 may be maintained by a spacer 90. The seal shoe 72 moves radially until a pressure equilibrium between the air gap 76 and the seal cavity 84 is reached.

Referring again to FIG. 3, the primary seal 68 has a plurality of circumferentially spaced and segmented seal shoes 72. The radial travel or movement of the seal shoes 72 is limited by features of the primary seal 68. For example, the seal shoe includes a radially inboard arm 92 and a radially outboard arm 94 separated by an arm gap 96. A seal shoulder 98 of the primary seal 68 is disposed in the arm gap 96. Radial clearance between the seal shoulder 98 and the radially inboard arm 92 limits radially outward travel or movement of the seal shoe 72, while radial clearance between the seal shoulder 98 and the radially outboard arm 94 limits radially inward travel or movement of the seal shoe 72.

The seal beams 74 extend between a radially fixed first beam end 108 and a radially movable second beam end 110. The seal shoe 72 is cantilevered from the second beam end 110 at a fixed end 112 of the seal shoe 72 to a free end 114 of the seal shoe 72 opposite the fixed end 112. As stated above, the travel of the seal shoes 72 is limited by the features of the primary seal 68. During operation of the seal 60, the free end 114 moves a first radial distance 116 greater than a second radial distance 118 that the fixed end 112 moves. Thus, there is incidental contact between the turbine rotor 64 and the seal shoe 72, such contact is likeliest to occur at the free end 114. To prevent or minimize damage to the turbine rotor 64 during such incidental contact with the seal shoe 72, the seal shoe 72 is particularly oriented and positioned relative to the turbine rotor 64.

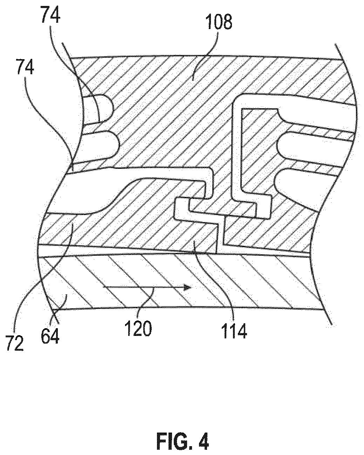

The turbine rotor 64 has a rotor rotation direction 120 about a rotor central axis which may be engine central longitudinal axis A, as shown in FIG. 3. To minimize damage to the turbine rotor 64 when contacted by the seal shoe 72, the seal shoe 72 is oriented relative to the rotor rotation direction 120 such that the fixed end 112 is located circumferentially upstream of the free end 114 relative to the rotor rotation direction 120. The orientation results in a "ramp" contact of the seal shoe 72 with the turbine rotor 64, such as illustrated in FIG. 4, which reduces the tendency of the seal shoe 72 to snag on and gouge the turbine rotor 64. Further, the direction of rotor 64 rotation guides the seal shoe 72 away from the turbine rotor 64.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

The present invention is not limited to the particular embodiment disclosed as the best mode contemplated for carrying out this present invention, but will include all embodiments falling within the scope of the claims.

## Claims

1. A hydrostatic seal and rotor assembly (60), comprising:
a rotor (64) having a rotor rotational direction (120) about a rotor central axis; and
a hydrostatic seal assembly (68) including:
a seal support (104);
a seal shoe (72) configured for sealing between the seal shoe (72) and the rotor (64); and
one or more seal beams (74) operably connecting the seal shoe (72) to the seal support (104), the one or more seal beams (74) configured as spring elements integral with the seal shoe (72) to allow radial movement of the seal shoe (72) relative to the seal support (104);
wherein the seal shoe (72) is circumferentially cantilevered from a fixed end (112) to a free end (114) opposite the fixed end (112),
**characterized in that** the fixed end (114) is located circumferentially upstream of the free end (112) relative to the rotor rotational direction (120), to prevent damage to the rotor by the seal shoe when the rotor is rotated.

2. The hydrostatic seal and rotor assembly (60) as claimed in claim 1, wherein the one or more seal beams (74) extend between a radially fixed first beam end (108) and a radially movable second beam end (110).

3. The hydrostatic seal and rotor assembly (60) as claimed in claim 2, wherein the fixed end (112) of the seal shoe (72) is located at the second beam end (110).

4. The hydrostatic seal and rotor assembly (60) as claimed in any of claims 1, 2 or 3, including one or more stops (92, 94, 98) formed in the seal shoe (72) configured to limit radial travel of the seal shoe (72).

5. The hydrostatic seal and rotor assembly (60) as claimed in any preceding claim, further comprising a seal carrier (66) configured to axially and radially retain the seal support (104).

6. The hydrostatic seal and rotor assembly (60) as claimed in any preceding claim, wherein the seal shoe (72) is a plurality of circumferentially spaced and segmented seal shoes (72).

7. The hydrostatic seal and rotor assembly (60) as claimed in claim 6, wherein each seal shoe (72) of the plurality of seal shoes (72) is circumferentially cantilevered from a fixed end (112) to a free end (114) opposite the fixed end (112), the fixed (112) end located circumferentially upstream of the free end (114) relative to the rotor rotational direction (120).

8. A turbine section (28) of a gas turbine engine (20), comprising:
a turbine stator (62);
a turbine rotor (64) configured to rotate in a rotor rotational direction (120) about an engine central longitudinal axis A relative to the turbine stator (62); and
a hydrostatic seal assembly (68),
wherein the hydrostatic seal assembly (68) and the turbine rotor (64) comprise the hydrostatic seal and rotor assembly (60) as claimed in any preceding claim.

9. A gas turbine engine (20), comprising:
a combustor (56);
a turbine section (28) as claimed in claim 8 in fluid communication with the combustor (56).

## Patentansprüche

1. Hydrostatische Dichtungs- und Rotoranordnung (60), umfassend:
einen Rotor (64) mit einer Rotordrehrichtung (120) um eine Rotormittelachse; und
eine hydrostatische Dichtungsanordnung (68) mit:
einem Dichtungshalter (104);
einem Dichtungsschuh (72), der zum Abdichten zwischen dem Dichtungsschuh (72) und dem Rotor (64) konfiguriert ist; und
einem oder mehreren Dichtungsbalken (74), die den Dichtungsschuh (72) operativ mit dem Dichtungshalter (104) verbinden, wobei der eine oder die mehreren Dichtungsbalken (74) als Federelemente konfiguriert sind, die integral mit dem Dichtungsschuh (72) sind, um eine radiale Bewegung des Dichtungsschuhs (72) relativ zum Dichtungshalter (104) zu ermöglichen;
wobei der Dichtungsschuh (72) in Umfangsrichtung vorspringend von einem befestigten Ende (112) zu einem freien Ende (114) gegenüber dem befestigten Ende (112) ist,
**dadurch gekennzeichnet, dass** das befestigte Ende (114) in Umfangsrichtung stromaufwärts des freien Endes (112) relativ zur Rotordrehrichtung (120) angeordnet ist, um eine Beschädigung des Rotors durch den Dichtungsschuh zu verhindern, wenn der Rotor gedreht wird.

2. Hydrostatische Dichtungs- und Rotoranordnung (60) nach Anspruch 1, wobei sich der eine oder die mehreren Dichtungsbalken (74) zwischen einem radial befestigten ersten Balkenende (108) und einem radial beweglichen zweiten Balkenende (110) erstrecken.

3. Hydrostatische Dichtungs- und Rotoranordnung (60) nach Anspruch 2, wobei das befestigte Ende (112) des Dichtungsschuhs (72) an dem zweiten Balkenende (110) angeordnet ist.

4. Hydrostatische Dichtungs- und Rotoranordnung (60) nach einem der Ansprüche 1, 2 oder 3, mit einem oder mehreren Anschlägen (92, 94, 98), die in dem Dichtungsschuh (72) ausgebildet sind und so konfiguriert sind, dass sie die radiale Bewegung des Dichtungsschuhs (72) begrenzen.

5. Hydrostatische Dichtungs- und Rotoranordnung (60) nach einem der vorhergehenden Ansprüche, ferner umfassend einen Dichtungsträger (66), der konfiguriert ist, um den Dichtungshalter (104) axial und radial zu halten.

6. Hydrostatische Dichtungs- und Rotoranordnung (60) nach einem der vorhergehenden Ansprüche, wobei der Dichtungsschuh (72) aus einer Vielzahl von in Umfangsrichtung beabstandeten und segmentierten Dichtungsschuhen (72) besteht.

7. Hydrostatische Dichtungs- und Rotoranordnung (60) nach Anspruch 6, wobei jeder Dichtungsschuh (72) der Vielzahl von Dichtungsschuhen (72) in Umfangsrichtung vorspringend von einem befestigten Ende (112) zu einem freien Ende (114) gegenüber dem befestigten Ende (112) ist, wobei das befestigte Ende (112) in Umfangsrichtung stromaufwärts des freien Endes (114) relativ zur Rotordrehrichtung (120) angeordnet ist.

8. Turbinenabschnitt (28) für ein Gasturbinentriebwerk (20), umfassend:
einen Turbinenstator (62);
einen Turbinenrotor (64), der so konfiguriert ist, dass er sich in einer Rotordrehrichtung (120) um eine Maschinenmittellängsachse A relativ zu dem Turbinenstator (62) dreht; und
eine hydrostatische Dichtungsanordnung (68),
wobei die hydrostatische Dichtungsanordnung (68) und der Turbinenrotor (64) die hydrostatische Dichtungs- und Rotoranordnung (60) nach einem der vorhergehenden Ansprüche umfassen.

9. Gasturbinentriebwerk (20), umfassend:
eine Brennkammer (56);
einen Turbinenabschnitt (28) nach Anspruch 8 in Fluidverbindung mit der Brennkammer (56).

## Revendications

1. Ensemble joint hydrostatique et rotor (60), comprenant :
un rotor (64) ayant un sens de rotation de rotor (120) autour d'un axe central de rotor ; et
un ensemble joint hydrostatique (68) comportant :
un support de joint (104) ;
un patin de joint (72) configuré pour assurer l'étanchéité entre le patin de joint (72) et le rotor (64) ; et
une ou plusieurs poutres de joint (74) reliant de manière opérationnelle le patin de joint (72) au support de joint (104), les une ou plusieurs poutres de joint (74) étant configurées comme des éléments de ressort d'un seul tenant avec le patin de joint (72) pour permettre un mouvement radial du patin de joint (72) par rapport au support de joint (104) ;
dans lequel le patin de joint (72) est circonférentiellement en porte-à-faux d'une extrémité fixe (112) à une extrémité libre (114) opposée à l'extrémité fixe (112),
**caractérisé en ce que** l'extrémité fixe (114) est située circonférentiellement en amont de l'extrémité libre (112) par rapport au sens de rotation du rotor (120), pour éviter que le patin de joint n'endommage le rotor lorsque le rotor tourne.

2. Ensemble joint hydrostatique et rotor (60) selon la revendication 1, dans lequel les une ou plusieurs poutres de joint (74) s'étendent entre une première extrémité de poutre (108) radialement fixe et une seconde extrémité de poutre (110) radialement mobile.

3. Ensemble joint hydrostatique et rotor (60) selon la revendication 2, dans lequel l'extrémité fixe (112) du patin de joint (72) est située au niveau de la seconde extrémité de poutre (110) .

4. Ensemble joint hydrostatique et rotor (60) selon l'une quelconque des revendications 1, 2 ou 3, comportant une ou plusieurs butées (92, 94, 98) formées dans le patin d'étanchéité (72) configurées pour limiter la course radiale du patin de joint (72).

5. Ensemble joint hydrostatique et rotor (60) selon une quelconque revendication précédente, comprenant en outre un support de joint (66) configuré pour retenir axialement et radialement le support de joint (104).

6. Ensemble joint hydrostatique et rotor (60) selon une quelconque revendication précédente, dans lequel le patin de joint (72) est une pluralité de patins de joint (72) espacés circonférentiellement et segmentés.

7. Ensemble joint hydrostatique et rotor (60) selon la revendication 6, dans lequel chaque patin de joint (72) de la pluralité de patins de joint (72) est circonférentiellement en porte-à-faux d'une extrémité fixe (112) à une extrémité libre (114) à l'opposé de l'extrémité fixe (112), l'extrémité fixe (112) étant située circonférentiellement en amont de l'extrémité libre (114) par rapport au sens de rotation du rotor (120).

8. Section de turbine (28) d'un moteur à turbine à gaz (20), comprenant :
un stator de turbine (62) ;
un rotor de turbine (64) configuré pour tourner dans un sens de rotation de rotor (120) autour d'un axe longitudinal central de moteur A par rapport au stator de turbine (62) ; et
un ensemble joint hydrostatique (68),
dans lequel l'ensemble joint hydrostatique (68) et le rotor de turbine (64) comprennent l'ensemble joint hydrostatique et rotor (60) selon une quelconque revendication précédente.

9. Moteur à turbine à gaz (20), comprenant :
une chambre de combustion (56) ;
une section de turbine (28) selon la revendication 8 en communication fluidique avec la chambre de combustion (56).
